# EUROPÄISCHE PATENTSCHRIFT

(11) **EP 0 697 796 B1**
(45) Veröffentlichungstag und Bekanntmachung des Hinweises auf die Patenterteilung: **21.05.2003**
(21) Anmeldenummer: 95111845.4
(22) Anmeldetag: 27.07.1995
(51) Int. Cl.: H04Q 3/545, H04Q 3/00

(54) **Kommunikationsvermittlungssystem mit einem Leistungsmerkmalsystem und einem Basisvermittlungssystem**
Communication switching system comprising a feature server system and a basic switching system
Système de commutation comprenant un système serveur de service et un système de base de commutation

(30) Priorität: 01.08.1994 DE 4427210
(43) Veröffentlichungstag der Anmeldung: 21.02.1996
(73) Patentinhaber: SIEMENS AKTIENGESELLSCHAFT, 80333 München (DE)
(72) Erfinder: Fritsche, Norbert, Dipl. Ing., D-80809 München (DE)

(56) Entgegenhaltungen:
- ITU-T RECOMMENDATION Q.1214, DISTRIBUTED FUNCTIONAL PLANE FOR INTELLIGENT NETWORK CS-1 (STUDY GROUP XI),1993, XP002123722
- TSANG S ET AL: "DETECTING FEATURE INTERACTIONS IN THE INTELLIGENT NETWORK" PROCEEDINGS OF THE 2ND INTERNATIONAL WORKSHOP ON FEATURE INTERACTIONS IN TELECOMMUNICATIONS SOFTWARE SYSTEMS, AMSTERDAM, THE NETHERLANDS, 8-10 MAY 1994, Seiten 236-248, XP000593318
- CAIN M: "MANAGING RUN-TIME INTERACTIONS BETWEEN CALL-PROCESSING FEATURES" IEEE COMMUNICATIONS MAGAZINE, FEBRUARY 1992, Bd. 30, Nr. 2, Seiten 44-50, XP000611177

## Beschreibung

Die Erfindung betrifft ein Kommunikationsvermittlungssystem nach dem Oberbegriff des Patentanspruches 1. Insbesondere betrifft sie ein Vermittlungssystem, bestehend aus einem Leistungsmerkmalsystem und einem Basisvermittlungssystem.

Heutige Vermittlungssysteme unterstützen eine Vielzahl von Leistungsmerkmalen. Dies sind Telekommunikationszusatzdienste, wie z. B. Rufumleitung, Konferenzschaltung, Rückfrage, Halten, etc. Leistungsmerkmale sind in prozessorgesteuerten Vermittlungsanlagen innerhalb der Vermittlungssteuerabläufe realisiert. Diese Vermittlungssteuerabläufe, auch Vermittlungs-Software genannt, beinhalten die Rufsteuerung sowie die Leistungsmerkmale. Hierbei sind die Leistungsmerkmale mit der Rufsteuerung sowie untereinander verwoben. Dies führt zu einer hohen Software-Komplexität, wodurch die Softwarestruktur bezüglich der Einführung neuerer Leistungsmerkmale unflexibel wird. Um die dadurch bedingten langen Einführungszeiten für neue Leistungsmerkmale zu verkürzen, ist überlegt worden, die bisher voneinander abhängigen Teile der Steuerabläufe voneinander getrennt in eigenständigen Modulen zu realisieren, die jeweils eine feste Schnittstelle nach außen besitzen. Ansätze zur Trennung der Leistungsmerkmalsteuerung von der Vermittlungssteuerung werden im Rahmen der sich mit intelligenten Netzen beschäftigenden Standardisierungsvorgänge "Intelligent Network" bei ITU-T SG 11 verfolgt. Siehe hierzu die Richtlinien des CCITT: "New Recommendation Q.1214, Distributed Functional Plane for Intelligent Network CS-1, COM XI-R212-E, Seiten 7 bis 69 sowie Anlageseiten 7 bis 9.

Durch Entkopplung der Leistungsmerkmalsteuerung von der Vermittlungssteuerung, die hierbei auf ihre Grundfunktionalität reduziert wird, entsteht eine sauber strukturierte Vermittlungsarchitektur. Diese ist sehr modular aufgebaut und erlaubt die schnelle Einführung neuer Leistungsmerkmale. Außerdem wird durch die Trennung der Leistungsmerkmale eine von den Leistungsmerkmalen und der Rufsteuerung unabhängige Entwicklung ermöglicht.

Eine solche Struktur teilt ein Vermittlungssystem bzw. die Vermittlungs-Software in ein Basisvermittlungssystem und ein Leistungsmerkmalsystem. Hauptbestandteile eines Basisvermittlungssystems sind eine Rufsteuerung, eine Datenbasis und eine Vielzahl von Leistungsmerkmalsteuerbausteinen. Die Rufsteuerung wird auf ihre grundlegenden Aufgaben, den Auf- und Abbau von Verbindungen bzw. Rufen, reduziert und deshalb als Basisrufsteuerung bezeichnet. Die Leistungsmerkmalsteuerbausteine bilden hierbei einen Satz von Funktionen, über die auf die Rufobjekte Ruf, Teilnehmer und Verbindung zugegriffen werden kann, über die also Rufe manipuliert werden können.

Die Leistungsmerkmale selbst sind in dem Leistungsmerkmalsystem enthalten, das über ein Protokoll mit dem Basisvermittlungssystem kommuniziert.

Die Basisrufsteuerung des Basisvermittlungssystems hat die Aufgabe, den Auf- und Abbau von Rufen bzw. deren zugehörigen Verbindungen nach Teilnehmeranforderungen durchzuführen. Sie behandelt folglich im Rahmen ihres Normalablaufes einen Zwei-Teilnehmerruf. Darüber hinaus sind Mechanismen zum Melden bestimmter Ereignisse an die Leistungsmerkmalsteuerung vorgesehen. Das Basisvermittlungssystem kann ohne Einflußnahme des Leistungsmerkmalsystemes einen Ruf zwischen zwei Teilnehmern steuern, d.h., es ist bezüglich des Auf- und Abbaus von Zwei-Teilnehmerrufen autark. Ein Zwei-Teilnehmerruf besteht zwischen zwei jeweils Teilnehmeranschlußeinheiten zugeordneten Kommunikationsendgeräten mit jeweils einer Verbindung, die den Bezug zwischen einem Kommunikationsendgerät und dem Ruf herstellt. Jeder Verbindung ist jeweils ein Zustandsautomat als Zustandsautomat der Verbindung zugeordnet. Die Verbindungen sind über den Ruf miteinander verknüpft.

Zwischen den Zuständen der Zustandsautomaten finden bestimmte Übergänge statt, die aufgrund von äußeren Anreizen ausgelöst werden. Solche Anreize sind Teilnehmer/Netz-Meldungen oder Internmeldungen, nämlich Meldungen zwischen den beiden Verbindungen eines Rufes.

Der vorliegenden Erfindung liegt die Aufgabe zugrunde, ein Kommunikationsvermittlungssystem aus einem Leistungsmerkmalsystem und einem Basisvermittlungssystem der oben angegebenen Art zu nennen, das ein einfaches Hinzufügen, Entfernen und Ändern von Leistungsmerkmalen innerhalb des Leistungsmerkmalsystemes ermöglicht.

Diese Aufgabe wird gelöst durch ein Kommunikationsvermittlungssystem mit den Merkmalen des Patentanspruches 1. Günstige Ausgestaltungen sind Gegenstand von Unteransprüchen.

In einem erfindungsgemäßen Kommunikationsvermittlungssystem besteht das Leistungsmerkmalsystem aus mehreren Leistungsmerkmalmodulen und einer hiermit kommunizierenden Leistungsmerkmalablaufsteuerung.

Dadurch wird ein Ändern der Leistungsmerkmale durch Hinzufügen, entfernen oder Abändern einzelner Leistungsmerkmalmodule ermöglicht.

Die Leistungsmerkmalmodule können von der Leistungsmerkmalablaufsteuerung zur Verfügung gestellte Leistungsmerkmal-Entwicklungsbausteine aufrufen. Von der Leistungsmerkmalablaufsteuerung werden Meldungen über in dem Basisvermittlungssystem auftretende vermittlungstechnische Ereignisse, Leistungsmerkmal-Aktivierungs- und Leistungsmerkmal-Deaktivierungsmeldungen sowie von Teilnehmerendgeräten eingegebene Daten jeweils an ein spezielles Leistungsmerkmalmodul übermittelt. Von den Leistungsmerkmalmodulen werden Signalisierungsmeldungen, Quittungsmeldungen, Datenanforderungen sowie Datenausgaben (z.B. Display-Daten) für die Teilnehmerendgeräte an das Basisvermittlungssystem übermittelt.

Ein in einem erfindungsgemäßen System zu verwendendes Basisvermittlungssystem ist beispielsweise in geeigneter Weise aufgebaut, daß innerhalb des Basisvermittlungssystems sowohl die Basisrufsteuerung als auch die Leistungsmerkmalsteuerbausteine auf dieselbe Datenbasis zugreifen können. Dadurch wird u.a. ermöglicht, daß Informationselemente der Rufobjekte, die von der Basisrufsteuerung zur Behandlung eines Rufes verwendet werden und hierzu aus der Datenbasis gelesen werden, von dem Leistungsmerkmalsystem mit Hilfe speziell zugeordneter Leistungsmerkmalsteuerbausteine vor der Behandlung durch die Basisrufsteuerung manipulierbar sind.

Der Steuerablauf der Basisrufsteuerung ist hierbei in Bearbeitungsmodule aufgeteilt, die einzelnen Meldungen eindeutig zugeordnet sind. Meldungen in diesem Sinne sind sowohl Internmeldungen zwischen den Verbindungen als auch Teilnehmer-/Metzmeldungen zwischen den Teilnehmeranschlußeinheiten und der Basisrufsteuerung. Dadurch wird die Behandlung von in der Datenbasis beeinflußten Rufobjekten unter Verwendung der Bearbeitungsmodule des Steuerablaufs der Basisrufsteuerung durch das Veranlassen der Abgabe einer jeweils erforderlichen Meldung initiierbar. D.h., daß das Leistungsmerkmalsystem im Bedarfsfall mit Hilfe einer jeweils zugeordneten Funktion, nämlich dem entsprechenden Leistungsmerkmalsteuerbaustein des Basisvermittlungssystems, nach den Erfordernissen des entsprechenden Leistungsmerkmals bestimmte Informationselemente bestimmter Rufobjekte eines Rufes in der Datenbasis manipulieren kann und daraufhin, ggf. auch mit Hilfe eines für den entsprechenden Zweck festgelegten Leistungsmerkmalsteuerbausteins das Absetzen einer Meldung an den Zustandsautomaten der betroffenen Verbindung in der Basisrufsteuerung veranlaBt. Diese Meldung führt dann zu einer Behandlung der beeinflußten Rufobjekte durch die Basisrufsteuerung des Basisvermittlungssystems. Die Basisrufsteuerung kann in diesem Falle eine solche Meldung als übliche interne Meldung bewerten und braucht nicht zu unterscheiden, ob diese interne Meldung durch den eine solche Meldung üblicherweise abgebenden Zustandsautomaten einer Verbindung oder durch das Leistungsmerkmalsystem veranlaßt worden ist. Leistungsmerkmalsteuerbausteine sind also beispielsweise Zugriffsmechanismen auf Rufobjekte. Diese Zugriffsmechanismen können nach einer Ablaufunterbrechung auch ein vom Leistungsmerkmalsystem initiiertes Wiederaufsetzen des Steuerablaufs der Basisrufsteuerung ermöglichen.

In einer günstigen Ausgestaltungsform der Basisrufsteuerung sind einzelne Bearbeitungsmodule des Steuerablaufs der Basisrufsteuerung derart strukturiert, daß nach Unterbrechung des Bearbeitungsmodulablaufes an einem Ereignisgenerierungspunkt das Leistungsmerkmalsystem ein Fortsetzen des Ablaufs an der Stelle des entsprechenden Ereignisgenerierungspunktes veranlassen kann. Solche Bearbeitungsmodule sind in diesem Fall wieder in entsprechende Submodule aufgeteilt, die im Bereich der genannten Ereignisgenerierungspunkte, nämlich im Bereich von Zustandsübergängen, entsprechende Zustandseinstiegspunkte vorsehen. Die Ereignisgenerierungspunkte sind hierbei in den Bearbeitungsmodulen der Basisrufsteuerung vorgesehen und können - üblicherweise durch entsprechende Leistungsmerkmale oder das Leistungsmerkmalsystem - bedarfsweise aktiviert werden. Ist ein Ereignisgenerierungspunkt aktiviert, so wird, wenn der Steuerablauf diesen Ereignisgenerierungspunktes erreicht, eine Mitteilung über den erreichten Zustand bzw. das Erfordernis einer Antwort als erwartetes Ereignis zum Leistungsmerkmalsystem übertragen. Erst nach Erhalt der erforderlichen Antwort kann in diesem Fall der Steuerablauf fortgesetzt werden

Zur Lösung der obengenannten Aufgabe ist insbesondere das Leistungsmerkmalsystem derart ausgestaltet, daß die Leistungsmerkmalablaufsteuerung abhängig von einer Leistungsmerkmalaktivierungsanforderung eine Leistungsmerkmalaktivierungsmeldung an das spezielle Leistungsmerkmalmodul übermittelt, das dem von dieser Aktivierungsanforderung angesprochenen Leistungsmerkmal zugeordnet ist.

Jedes Leistungsmerkmalmodul enthält mehrere Teilsteuerungen, mindestens eine Koordinationssteuerung und eine Aufrufsteuerung.

Hierbei steuert jede Teilsteuerungen jeweils einen meldungsabhängigen Teilablauf. Die Koordinationssteuerungen empfangen jeweils von der Leistungsmerkmalablaufsteuerung Meldungen und leiten diese Meldungen an die diesen Meldungen jeweils zugeordneten Teilsteuerungen weiter. Eine Aufrufsteuerung dient jeweils zum von einer eintreffenden Leistungsmerkmalaktivierungsmeldung abhängigen Aufrufen einer Koordinationssteuerung.

In einem Kommunikationssystem nach der Erfindung wird daher ein Ändern, wie z.B. Hinzufügen oder Abändern von Leistungsmerkmalen auf ein Ändern der zugeordneten Teilsteuerung beschränkt. Die für die einzelnen Leistungsmerkmale jeweils erforderliche Steuersoftware der Teilsteuerungen wird vereinfacht. Die Steuersoftware zum Ausführen der Funktionen der Aufrufsteuerung und der Koordinationssteuerung ist jeweils weitgehend vereinheitlicht.

Wenn in Ausführungsformen erfindungsgemäßer Systeme eine Koordinationssteuerung jeweils benötigte Teilsteuerungen instantiiert und eventuell außerdem eine Aufrufsteuerung jeweils benötigte Koordinationssteuerungen instantiiert, wird das Leistungsmerkmalsystem weiter vereinfacht, da ein mehrfaches paralleles Bearbeiten desselben Leistungsmerkmalsteuerablaufs ermöglicht wird, ohne daß eine statische Belegung eines Speichermediums mit fest vorgesehenen Instanzen der mehrfach benötigten Abläufe erforderlich ist. Dadurch kann der Speicherplatzbedarf reduziert werden.

Nachstehend wird die Erfindung anhand von Beispielen unter Bezugnahme auf die Figuren näher erläutert.

Es zeigt:
- Figur 1 in Blockdarstellung die Struktur eines Kommunikationssystemes mit erfindungsgemäßer Ausgestaltung des Leistungsmerkmalsystemes,
- Figur 2 in Blockdarstellung die Struktur eines Leistungsmerkmalmodules LMB, LMB1, LMB2, LMB3 nach Figur 1,
- Figuren 3 bis 8 Leistungsmerkmalmodule LMB entsprechend Figur 2 in unterschiedlichen Zuständen bzw. mit Besonderheiten,
- Figur 9 die Struktur einer Ausgestaltungsform der Leistungsmerkmalablaufsteuerung LMAS nach Figur 1; und
- Figur 10 den SDL-Prozeß einer Teilsteuerung nach Figur 2 bis 8.

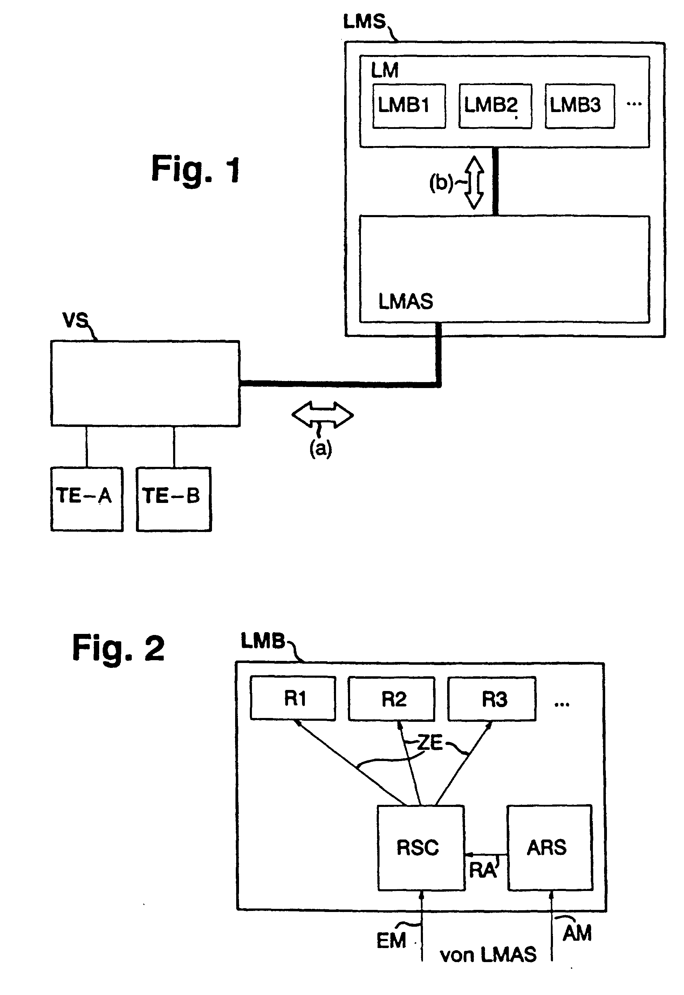

Figur 1 zeigt die Struktur eines Kommunikationssystems, bestehend aus einem Basisvermittlungssystem VS (nachstehend Vermittlungssystem VS genannt), das über ein Protokoll (a) mit einem Leistungsmerkmalsystem LMS kommuniziert und das über eine nicht dargestellte Teilnehmer-/Netzschnittstelle und jeweils über Teilnehmeranschlußeinheiten mit Kommunikationsendgeräten TE-A und TE-B verbunden ist.

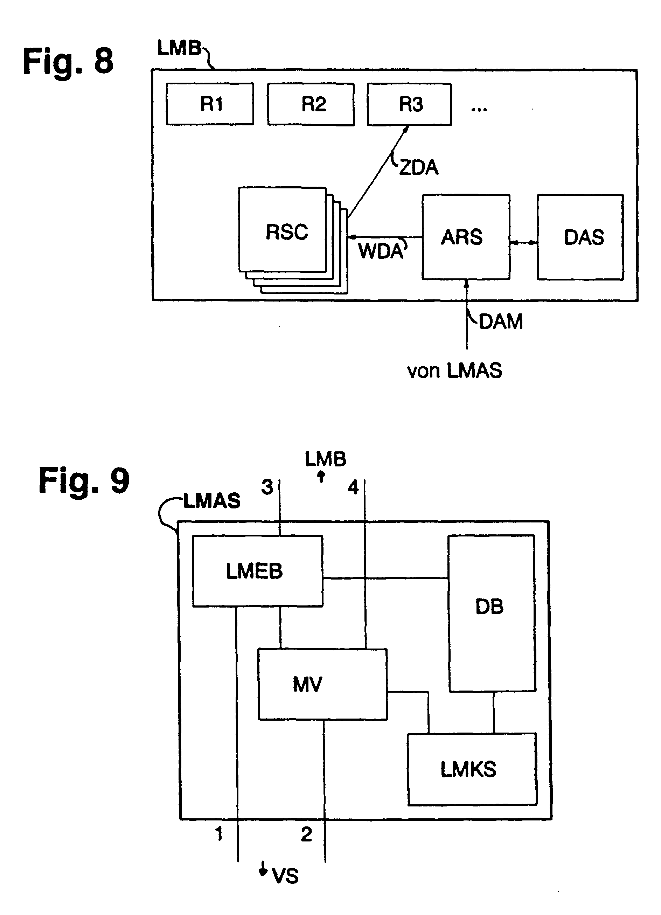

Das Leistungsmerkmalsystem LMS besteht aus einer Leistungsmerkmalablaufsteuerung LMAS und den Leistungsmerkmalen LM, die jeweils aus einem Leistungsmerkmalmodul LMB1, LMB2 oder LMB3 bestehen. Zur Steuerung von Leistungsmerkmalen LM kommuniziert (a) das Leistungsmerkmalsystem LMS mit dem Vermittlungssystem VS, das vermittlungstechnische Ereignisse, wie z.B. Rufzustandsänderungen, Endgerätestatus usw. an das Leistungsmerkmalsystem LMS meldet und durch das Leistungsmerkmalsystem LMS aufrufbare Funktionen zur Verfügung stellt, die die Rufverarbeitung derart beeinflussen können, daß der gewünschte Leistungsmerkmalsteuerablauf erzielt werden kann. Die Leistungsmerkmalablaufsteuerung LMAS kommuniziert (b) mit den Leistungsmerkmalmodulen LMB1, LMB2, LMB3. Die Leistungsmerkmalablaufsteuerung LMAS enthält Leistungsmerkmalentwicklungsbausteine LMEB (siehe Figur 9) zur Entwicklung der Leistungsmerkmale LM. Diese Leistungsmerkmalentwicklungsbausteine LMEB sind von den Leistungsmerkmalmodulen LMB1, LMB2, LMB3 aufrufbar. Die Leistungsmerkmalablaufsteuerung LMAS übermittelt den Leistungsmerkmalmodulen LMB1, LMB2, LMB3 Meldungen über von der Vermittlungssteuerung VS mitgeteilte Ereignisse sowie die Leistungsmerkmalsignalisierung, wie z.B. Aktivierungsmeldungen, Meldungen zur Deaktivierung von Leistungsmerkmalen und Meldungen bezüglich der Datenein- und Datenausgabe zwischen Leistungsmerkmal und Teilnehmerendgerät TE-A, TE-B. Die Ereignisse der Vermittlungssteuerung VS werden hierbei innerhalb der Leistungsmerkmalablaufsteuerung LMAS bewertet, um entscheiden zu können, welchem Leistungsmerkmal das Ereignis zugestellt wird. Vorzugsweise schließt dieser Vorgang die Verträglichkeitsprüfung zwischen den momentan aktiven und evtl. zu aktivierenden Leistungsmerkmalen ein, um evtl. auftretende Konflikte zu vermeiden.

Den einzelnen Leistungsmerkmalen sind Leistungsmerkmalmodule LMB, LMB1, LMB2, LMB3 zugeordnet. Figur 2 zeigt den strukturellen Aufbau eines der im Leistungsmerkmalsystem LMS der Figur 1 vorgesehenen Leistungsmerkmalmodule LMB1, LMB2, LMB3. Das dargestellte Leistungsmerkmalmodul LMB enthält eine Aufrufsteuerung ARS, eine Koordinationssteuerung RSC sowie Teilsteuerungen R1, R2, R3.

Ein Leistungsmerkmalmodul LMB bietet anforderbare, also aktivierbare bzw. aufrufbare Steuerabläufe, wie z.B. Rufumleitung an. Innerhalb eines Leistungsmerkmals LM können Unter-Leistungsmerkmale vorgesehen sein, deren Aufruf an die Existenz des Aufrufs bzw. der Aktivierung des übergeordneten Leistungsmerkmals LM gebunden ist. Ein Beispiel für ein Unter-Leistungsmerkmal ist die Ausgabe aller einprogrammierten Kurzwahlziele oder das Hinzufügen eines neuen Kurzwahlzieles. Diese beiden Unter-Leistungsmerkmal-Aufrufe sind von der vorherigen Aktivierung des Leistungsmerkmals "Kurzwahl" abhängig, können also nur nach Aktivierung dieses Leistungsmerkmals angesprochen werden.

Ein Leistungsmerkmalmodul LMB besteht aus einer Aufrufsteuerung ARS, einer oder mehreren Koordinationssteuerung RSC und mehreren Teilsteuerungen R1, R2, R3. Hierbei sind normalerweise mindestens drei Teilsteuerungen, nämlich beispielsweise FReq für die Aktivierung des Leistungsmerkmales, FCanc für die Deaktivierung des Leistungsmerkmales sowie eine Teilsteuerung für ein Ereignis erforderlich. Ein Leistungsmerkmalmodul LMB kann ggf. auch eine Deaktivierungsauswahlsteuerung DAS enthalten (Figur 8). Andererseits kann ggf. bei speziellen Anwendungsfällen auf eine Teilsteuerung für die Deaktivierung verzichtet werden.

Die Konfigurationsdaten eines Leistungsmerkmalmodules LMB beinhalten einen Leistungsmerkmalbezeichner der zur Verfügung gestellten Leistungsmerkmale LM sowie eine Zuordnung der Meldungen auf die Teilsteuerungen R1, R2, R3. Bezeichner für ein Leistungsmerkmal LM kann z.B. SD (Kurzform für den englischsprachigen Begriff "SpeedDailling") für "Kurzwahl" sein. Beispiele für Bezeichner von Unter-Leistungsmerkmalen sind AddSD: "SD-Ziel hinzufügen" und SDData: "SD-Ziele anzeigen".

Aufgrund der in den Konfigurationsdaten des Leistungsmerkmalmodules LMB enthaltenen Informationen über die Zuordnung der Meldungen auf die Teilsteuerungen R1, R2, R3 kann die anzusprechende Teilsteuerung beispielsweise unter Angabe eines Bezeichners bestimmt werden, wenn im Rahmen einer Leistungsmerkmalsteuerung die gleiche, von unterschiedlichen Absendern stammende Meldung von unterschiedlichen Teilsteuerungen verarbeitet werden soll. Ein Beispiel hierfür ist bei dem Leistungsmerkmal "Konferenzschaltung" das "Auflegen" des Konferenz-Masters oder eines Konferenz-Teilnehmers.

Nachstehend wird eine Konfigurationsdatei für das Leistungsmerkmal "Kurzwahl" mit dem Leistungsmerkmalbezeichner SD in Verbindung mit dem Unter-Leistungsmerkmal "SD-Ziel hinzufügen" - Leistungsmerkmalbezeichner AddSD - aufgelistet, wobei das Ereignis E1 zu einer Rufnummernübersetzung führt:

| **Meldung** | **LM_ID** | **R_Var** | **R_No** |
|---|---|---|---|
| FReq | SD | | 1 |
| FCanc | SD | Default | 2 |
| E1 | | Default | 3 |
| SubFReq | AddSD | | 4 |

LM-ID steht hierbei für den Leistungsmerkmalbezeichner, R_Var entspricht einem Bezeichner zur Kennzeichnung des an der Leistungsmerkmalaktivierung beteiligten Endgerätes und R_No ist eine Kennzeichnung für die auszuwählende Teilsteuerung R1, R2, R3.

Die Aufrufsteuerung ARS eines Leistungsmerkmalmoduls LMB liest die Konfigurationsdaten des Leistungsmerkmals LM ein. Sie meldet das Leistungsmerkmal bei der Leistungsmerkmalablaufsteuerung LMAS an, indem sie dieser eine Leistungsmerkmalbezeichnung sowie die Adresse der Aufrufsteuerung ARS mitteilt. Die Aufrufsteuerung ARS empfängt von der Leistungsmerkmalablaufsteuerung LMAS Aktivierungsmeldungen FReq. Sie ruft daraufhin eine in dem Leistungsmerkmalmodul LMB enthaltene Koordinationssteuerung RSC auf, instantiiert je nach Realisierungsform der Leistungsmerkmalmodule diese Koordinationssteuerung RSC und kreiert dadurch eine neue Leistungsmerkmalinstanz, die durch den RSC-Aufruf repräsentiert ist.

Die Koordinationssteuerung RSC liest die Konfigurationsdaten ein Außerdem meldet sie die ihr zugeordnete Leistungsmerkmalinstanz und ggf. Unter-Leistungsmerkmale bei der Leistungsmerkmalablaufsteuerung LMAS an. Die Koordinationssteuerung RSC repräsentiert die Leistungsmerkmalinstanz und gibt dieser somit, beispielsweise aufgrund der Adresse der Koordinationssteuerung RSC eine bestimmte eindeutige Kennung. Sie ist Empfänger aller Ereignismeldungen, die dem entsprechenden Leistungsmerkmalaufruf zugestellt werden. Die Koordinationssteuerung RSC verteilt diese Meldungen abhängig von Konfigurationsdaten und einem Bezeichner R_Var für ein Kommunikationsendgerät. Falls demselben Ereignis mehrere Teilsteuerungen R1, R2, R3 zugeordnet sind, können diese anhand dieses Bezeichners R_Var unterschieden werden. Diese Bezeichner R_Var werden jeweils bei Aktivierung eines Leistungsmerkmals LM als Aktivierungsparameter in eine Datenbasis DB der Leistungsmerkmalablaufsteuerung LMAS abgelegt. Die Koordinationssteuerung RSC ruft die zur Durchführung eines Leistungsmerkmals erforderlichen Teilsteuerungen R1, R2, R3 des Leistungsmerkmalmoduls LMB, LMB1, LMB2 oder LMB3 auf und instantiiert diese entsprechende Teilsteuerung. Die Koordinationssteuerung RSC sequentialisiert den Aufruf der Teilsteuerungen R1, R2, R3. Die Teilsteuerungen R1, R2, R3 melden ihr, wenn sie beendet sind. Dies kann erforderlich sein, um sicherzustellen, daß nicht gleichzeitig mehrere Teilsteuerungen denselben Ruf beeinflussen. Bei aktivierter Teilsteuerung R1, R2, R3 werden eintreffende Meldungen in der Koordinationssteuerung RSC gepuffert. Eine Koordinationssteuerung RSC besteht jeweils für die Dauer eines Leistungsmerkmalaufrufes bzw. einer Leistungsmerkmalaktivierung und empfängt alle Ereignismeldungen, die diesem Leistungsmerkmalaufruf von der Leistungsmerkmalablaufsteuerung LMAS zugeordnet werden.

Der Steuerablauf eines Leistungsmerkmals LM wird durch eine Anzahl von Teilsteuerabläufen R1, R2, R3 beschrieben. Diese Teilsteuerabläufe R1, R2, R3 werden anhand der eintreffenden Meldungen ausgewählt. Jede Teilsteuerung R1, R2, R3 bearbeitet einen genau festgelegten Teilsteuerungsablauf des Leistungsmerkmals LM.

Teilsteuerungen R1, R2, R3 sind abhängig von entsprechenden Meldungen nach dem folgenden Prinzip untergliedert:
- Aktivierungsmeldungen für Leistungsmerkmale LM und evtl. zugeordnete Unter-Leistungsmerkmale;
- Deaktivierungsmeldungen;
- Ereignismeldungen der Vermittlungssteuerung VS, und zwar Statusereignismeldungen sowie Meldungen von Ereignissen, die auf Initiative des Leistungsmerkmalsystems LMS durch Zustandsübergänge der Verbindungen von dem Vermittlungssystem VS generiert werden; und
- Zeitgeberinformationen (Timer) der Leistungsmerkmalentwicklungsbausteine LMEB.

Quittungsmeldungen von Leistungsmerkmalen LM, die auf Leistungsmerkmalentwicklungsbaustein-Aufrufe folgen, werden innerhalb der Teilsteuerungen R1, R2, R3 empfangen und führen folglich nicht zu einer weiteren Untergliederung.

Innerhalb der Teilsteuerungen R1, R2, R3 werden alle Aktionen ausgeführt, die bei Eintreffen einer der jeweiligen Teilsteuerung zugeordneten Meldung erfolgen sollen. Dies sind sowohl Leistungsmerkmalentwicklungsbaustein-Aufrufe als auch Kontrollstrukturen, wie Vergleiche, Verzweigungen etc.

Sobald das Verarbeiten neuer derartiger Meldungen erforderlich ist, muß eine neue Teilsteuerung angelegt werden.

Um Korrelationen zwischen unterschiedlichen Leistungsmerkmalen LM auflösen zu können, werden in der Leistungsmerkmalablaufsteuerung LMAS die Daten für Aktivierung und Aufruf von Leistungsmerkmalen LM benötigt und daher in der Datenbasis DB abgelegt. Auch die Leistungsmerkmalmodule LMB, LMB1, LMB2 oder LMB3 benötigen diese Daten. Die Leistungsmerkmalmodule LMB, LMB1, LMB2, LMB3 des Ausführungsbeispiels besitzen jedoch vorzugsweise keine eigene Datenbasis DB. Daher vermerken die Teilsteuerungen R1, R2, R3 Daten, die für den weiteren Ablauf eines Leistungsmerkmalsteuerablaufes wichtig sind, in der Datenbasis DB der Leistungsmerkmalablaufsteuerung LMAS (Figur 9). Die Adressierung erfolgt hierbei über die Kennung der entsprechenden Koordinationssteuerung RSC auf eindeutige Weise. Nach abgearbeiteter Teilsteuerung R1, R2 oder R3 gehen alle lokalen Daten der Teilsteuerungen R1, R2, R3 mit Ausnahme der in der Datenbasis DB der Leistungsmerkmalablaufsteuerung LMAS speziell abgelegten Daten verloren.

Nachstehend wird anhand des Leistungsmerkmals "Rufumleitung nach Zeit" ein Beispiel für die Unterteilung eines Leistungsmerkmal-Steuerablaufes in Teilsteuerungen R1 bis R6 unter Angaben der Teilsteuerungen sowie der zugeordnetene Meldungen und der wichtigsten Steueraktivitäten dargelegt:
- R1 FReq =: Leistungsmerkmal-Aktivierungsmeldung Bearbeitung der Aktivierung (FReq) Umleitungsziel vom Teilnehmer einsammeln Ereignisgenerierungspunkt "Umleitungsquelle klingelt" im Vermittlungssystem VS setzen Aktivierungsparameter in der Datenbasis DB der Leistungsmerkmalablaufsteuerung LMAS speichern
- R2 FCanc =: Leistungsmerkmal-Deaktivierungsmeldung Bearbeitung der Deaktivierung (FCanc) Ereignisgenerierungspunkt des Vermittlungssystems VS löschen
Aktivierungsparameter löschen
- R3 Ereignis:: "Umleitungsquelle klingelt"
Zeitgeber setzen
Ereignisgenerierungspunkte: "Umleitungsquelle hebt ab", "Anrufer legt auf" im Vermittlungssystem VS setzen
- R4: Zeitgeber läuft ab
Ruf umleiten
Ereignisgenerierungspunkte im Vermittlungssystem VS löschen
- R5: Umleitungsquelle nimmt Hörer innerhalb des Zeitgeber-Intervalls ab
Zeitgeber löschen
Ereignisgenerierungspunkt im Vermittlungssystem VS löschen
Rufverarbeitung des Vermittlungssystems VS normal fortsetzen
- R6: Anrufer legt innerhalb des Zeitgeber-Intervalls auf Zeitgeber löschen
Ereignisgenerierungspunkte löschen
Rufverarbeitung des Vermittlungssystems VS normal fortsetzen

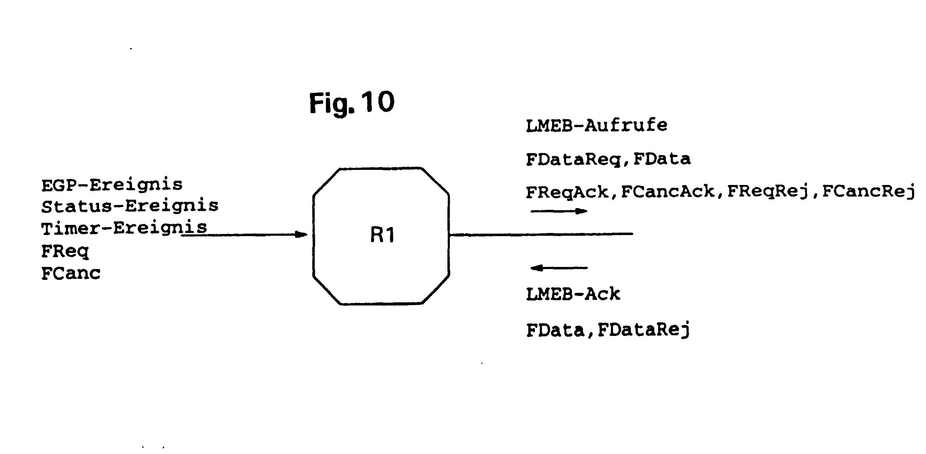

Wie aus Figur 10 zu erkennen ist, entspricht eine Teilsteuerung R1, R2, R3 in SDL genau einem SDL-Prozeß. In Figur 10 ist der Prozeß einschließlich der von ihm verarbeiteten bzw. generierten Signale dargestellt. Die Meldungen der Leistungsmerkmalsignalisierung beginnen hierbei jeweils mit F (vom angelsächsischen Ausdruck "feature"). Demnach erhält eine Teilsteuerung R1 von der Leistungmerkmal-Ablaufsteuerung LMAS Meldungen "FReq", "FCanc", die die Aktivierung bzw. Deaktivierung betreffen sowie Meldungen "EGP-Ereignis", "Status-Ereignis", "Timer-Ereignis" über Ereignisgenerierungspunkt-Ereignisse, Statusereignisse und Zeitgeberereignisse. Die Teilsteuerung R1 gibt an die Leistungmerkmal-Ablaufsteuerung LMAS Aufrufe "LMEB-Aufrufe" für Leistungsmerkmal-Entwicklungsbausteine LMEB ab, sowie Daten bzw. Quittungen betreffende Meldungen "FDataReq", "FData", "FReqAck", "FCancAck", "FReqRej", "FCancRej" zum Aufrufen von Daten, zur Datenausgabe, zur negativen sowie zur positiven und negativen Quittierung auf Aktivierungs- und Deaktivierungsmeldungen. Die Teilsteuerung R1 erhält von der Leistungmerkmal-Ablaufsteuerung LMAS Aufrufe "LMEB-Aufrufe" Quittungs-Meldungen für abgearbeitete Leistungsmerkmal-Entwicklungsbausteine LMEB sowie Daten betreffende Meldungen "FData" zum Eingeben von Daten.

Folgende Meldungen führen zu einer Untergliederung in unterschiedliche Teilsteuerungen R1, R2, R3:
- Meldungen über Ereignisse des Vermittlungssystemes VS und zwar Ereignisgenerierungspunkt-Ereignisse und Statusereignisse;
- Leistungsmerkmalsignalisierung des Vermittlungssystemes oder eines Teilnehmerendgerätes TE-A, TE-B zum Vermittlungssystem VS, die von dort transparent an das Leistungsmerkmalsystem weitergeleitet werden, und zwar Aktivierungsmeldungen FReq sowie Deaktivierungsmeldungen FCanc;
- Zeitgebermeldungen. Die Zeitgeber werden innerhalb der Leistungsmerkmalentwicklungsbausteine LMEB zur Verfügung gestellt.

Der Verarbeitungsteil der Teilsteuerungen R1, R2, R3 liefert folgende Ein-/Ausgabemeldungen:
- Leistungsmerkmalentwicklungsbaustein-Aufrufe und Quittungen;
- Leistungsmerkmalsignalisierung, und zwar Quittungen für die Aktivierung bzw. Deaktivierung FReqAck, FReqRej, FCancAck und FCancRej sowie eine Datenein- und Datenausgabe von und zu Teilnehmerendgeräten FDataReq, FData und FDataRej.

Leistungsmerkmal-Aktivierungen sind jeweils auf ein Teilnehmerendgerät TE-A, TE-B bezogen. Sind für ein Teilnehmerendgerät TE-A, TE-B mehrere Instanzen des gleichen Leistungsmerkmals aktiviert, so kann anhand der Deaktivierungsmeldungen FCanc die zu deaktivierende Leistungsmerkmalinstanz nicht eindeutig bestimmt werden, da die Deaktivierungsmeldung FCanc neben dem Leistungsmerkmalbezeichner LM_ID nur eine Kennung des Teilnehmerendgerätes TE-A, TE-B sowie Daten über die Rufe des Teilnehmerendgerätes TE-A, TE-B enthält. In solchen Fällen kann vorzugsweise eine Deaktivierungsauswahlsteuerung DAS vorgesehen sein, um eine zu beendende Koordinationssteuerung RSC auszuwählen. Die erforderlichen Daten werden durch die Deaktivierungsauswahlsteuerung DAS von dem betroffenen Teilnehmerendgerät TE-A, TE-B angefordert, um daraufhin die Adresse der zur Aktivierung gehörenden Koordinationssteuerung RSC zu bestimmen.

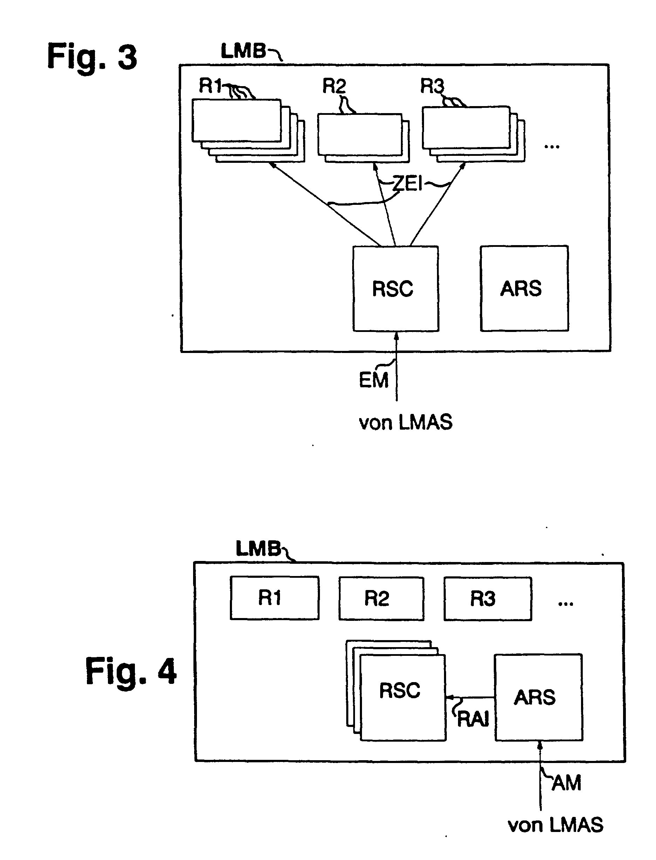

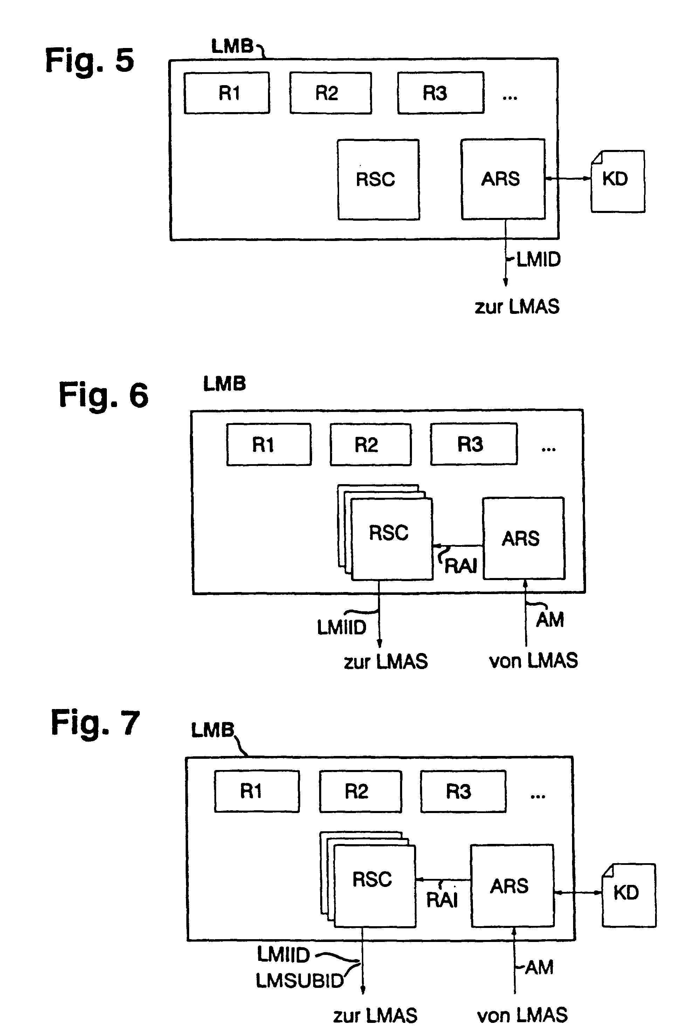

Nachfolgend werden die Steuerabläufe eines Leistungsmerkmalmodules LMB, LMB1, LMB2, LMB3 unter Bezugnahme auf die Figuren 2 bis 8 beschrieben. Die Aufrufsteuerung ARS empfängt die ihr durch die Leistungsmerkmalablaufsteuerung LMAS zugeordnete Aktivierungsmeldung AM. Anhand der Konfigurationsdaten wird der Leistungsmerkmalbezeichner überprüft. Daraufhin wird eine neue Instanz der Koordinationssteuerung RSC generiert (RAI in Figur 4). Dieser Koordinationssteuerung RSC wird die Aktivierungsmeldung RA bzw. RAI übergeben. Die Koordinationssteuerung RSC meldet sich und zusätzlich evtl. Unter-Leistungsmerkmale unter ihrer Adresse bei der Leistungsmerkmalablaufsteuerung LMAS an (LMIID, LMSUBID, in Figur 6 bzw. Figur 7). Daraufhin wird in der Datenbasis DB der Leistungsmerkmalablaufsteuerung LMAS ein Speicherbereich für diese Leistungsmerkmalinstanz angelegt. Die Koordinationssteuerung RSC bestimmt anhand der Konfigurationsdaten die Teilsteuerung R1, R2 oder R3, die für die eingetroffene Aktivierungsmeldung zuständig ist und instantiiert ggf. daraufhin diese aufzurufende Teilsteuerung R1, R2 oder R3. Der zu aufzurufenden Teilsteuerung R1, R2 oder R3 wird die Aktivierungsmeldung ZE (in Figur 2) bzw. mit Instantiierung ZEI (in Figur 3) übergeben. Die entsprechende Teilsteuerung R1, R2, R3 führt daraufhin ihren Ablauf durch.

Figur 2 zeigt ein Ausführungsbeispiel, bei dem die Aufrufsteuerung ARS auf eine Aktivierungsmeldung AM hin eine Koordinationssteuerung RSC aufruft (RA). Dies ist sinnvoll, wenn nur eine Instanz einer Koordinationssteuerung RSC vorgesehen ist oder wenn für jede Instanz eine eigene Koordinationssteuerung RSC angelegt ist, die nur aufgerufen zu werden braucht. Eine diesbezüglich günstigere Lösung wird in Figur 4 gezeigt, in der die Aufrufsteuerung ARS jeweils eine Koordinationssteuerung RSC aufruft und instantiiert (RAI).

In gleicher Weise zeigt Figur 2, daß die Koordinationssteuerung RSC durch eine Meldung ZE jeweils eine Teilsteuerung R1, R2, R3 aufrufen kann. Hier zeigt Figur 3 die Möglichkeit, daß die Koordinationssteuerung RSC von jeder Teilsteuerung R1, R2, R3 über den Aufruf ZEI bedarfsweise mehrere Instanzen einrichten kann.

Figur 5 zeigt ein Leistungsmerkmalmodul mit Teilsteuerungen R1, R2, R3, einer Koordinationssteuerung RSC und einer Aufrufsteuerung ARS. Wie in Figur 5 dargestellt, gibt die Aufrufsteuerung ARS beispielsweise bei der Initialisierung des Leistungsmerkmalsystems LMS Konfigurationsdaten KD über das jeweilige Leistungsmerkmal, nämlich den Leistungsmerkmalbezeichner sowie die Adresse der Aufrufsteuerung ARS in eine Konfigurationsmeldung LMID des Leistungsmerkmals an die Leistungsmerkmalablaufsteuerung LMAS ab.

Wie aus Figur 6 zu erkennen ist, wird eine instantiierte Koordinationssteuerung RSC nach Eingang einer Aktivierungsmeldung AM von der Leistungsmerkmalablaufsteuerung LMAS an die Aufrufsteuerung ARS und nach der Instanziierungs- und Aufrufinformation RAI der Aufrufsteuerung ARS an die Koordinationssteuerung RSC eine Meldung LMIID mit Adreßinformationen der generierten RSC-Instanz an die Leistungsmerkmalablaufsteuerung LMAS.

Wie aus Figur 7, die das gleiche Leistungsmerkmalmodul LMB wie Figur 6 zeigt, zu erkennen ist, gibt die Koordinationssteuerung RSC auf eine Meldung RAI von der Aufrufsteuerung ARS zum Aktivieren und Instanziieren dieser Koordinationssteuerung RSC hin sowohl eine Meldung LMSUBID mit AdreBinformationen der Leistungsmerkmalkennungen bzw. Konfigurierungsdaten von Unter-Leistungsmerkmalen als auch eine Meldung LMIID mit der Adreßinformation der generierten RSC-Instanz an die Leistungsmerkmalablaufsteuerung LMAS ab.

Ist für ein bestimmtes Teilnehmerendgerät nur eine Leistungsmerkmal-Aktivierung eines Leistungsmerkmals vorhanden, so wird eine Deaktivierungsmeldung DAM vorzugsweise (in den Figuren nicht dargestellt) von der Leistungsmerkmalablaufsteuerung LMAS unmittelbar der aufgerufenen Koordinationssteuerung RSC zugestellt. Ist für einen Teilnehmer ein Leistungsmerkmal mehrfach aktiviert, hat also z.B. ein Teilnehmer mehrere automatische Rückrufe aktiviert, so stellt die Leistungsmerkmalablaufsteuerung LMAS eine Deaktivierungsmeldung der Aufrufsteuerung ARS zu, die diese ihrerseits zur Deaktivierungsauswahlsteuerung DAS übermittelt (Figur 8). Die Deaktivierungsauswahlsteuerung erfragt daraufhin üblicherweise von dem Teilnehmerendgerät TE-A, TE-B weitere Daten, die den zu deaktivierenden Leistungsmerkmalaufruf näher spezifizieren. Daraufhin wird über die Leistungsmerkmalentwicklungsbausteine LMEB die Adresse der zugehörigen Koordinationssteuerung RSC bestimmt. Daraufhin wird die Deaktivierungsmeldung DAM gemeinsam mit der entsprechenden RSC-Adresse an die Aufrufsteuerung ARS gegeben, die daraufhin die Meldung WDA an die richtige Koordinationssteuerung RSC weiterleitet. Die richtige Koordinationssteuerung RSC gibt dann die Meldung ZDA an die richtige Teilsteuerung R1, R2, R3 weiter.

Die Hauptaufgaben der in Figur 9 detaillierter dargestellten Leistungsmerkmalablaufsteuerung LMAS sind die Verteilung der von der Vermittlungssteuerung eintreffenden Meldungen (a) an zu aktivierende, aufzurufende, aufgerufene bzw. zu deaktivierende Leistungsmerkmale LM sowie die Funktion eines Funktionsservers für die Leistungsmerkmalmodule LMB, LMB1, LMB2, LMB3, d.h. das Bereitstellen von durch die Leistungsmerkmalmodule LMB, LMB1, LMB2, LMB3 aufrufbaren Funktionen, den Leistungsmerkmalentwicklungsbausteinen LMEB. Von der Leistungsmerkmalablaufsteuerung LMAS zu verteilende Meldungen sind hierbei Ereignismeldungen, die die Leistungsmerkmalablaufsteuerung LMAS an aufgerufene Leistungsmerkmale LM, also an spezielle Koordinationssteuerungen RSC abgibt sowie die Leistungsmerkmalsignalisierung. Zur Leistungsmerkmalsignalisierung gehören Aktivierungsmeldungen an die Aufrufsteuerung ARS des betreffenden Leistungsmerkmalmodules LMB, LMB1, LMB2, LMB3, die Funktion der Datenein- und Datenausgabe zur Übermittlung von Daten zwischen den einzelnen Teilsteuerungen R1, R2, R3 und dem Vermittlungssystem VS. Hierbei ist die Datenübertragung zwischen den Teilsteuerungen R1 und den Kommunikationsendgeräten TE-A und TE-B über die Vermittlungssystem VS eingeschlossen. Zur Leistungsmerkmalsignalisierung zählt außerdem die Abgabe einer Deaktivierungsmeldung an ein zu deaktivierendes Leistungsmerkmal LM. Ist das zu deaktivierende Leistungsmerkmal für ein Teilnehmerendgerät TE-A, TE-B eindeutig zuordenbar, so wird die Deaktivierungsmeldung DAM unmittelbar an die betreffende Koordinationssteuerung RSC abgegeben. Ist die Zuordnung einer Deaktivierungsmeldung nicht eindeutig, so gibt die Leistungsmerkmalablaufsteuerung LMAS die entsprechende Deaktivierungsmeldung DAM an die Aufrufsteuerung ARS ab, die diese dann an eine Deaktivierungsauswahlsteuerung DAS weiterleitet.

Die Leistungsmerkmalablaufsteuerung LMAS stellt von Leistungsmerkmalen LM aufrufbare Funktionen, die Leistungsmerkmalentwicklungsbausteine LMEB zur Verfügung. Beispiele solcher Leistungsmerkmalentwicklungsbausteine LMEB sind der lokale Zugriff auf die Datenbasis DB der Leistungsmerkmalablaufsteuerung LMAS, der Aufruf einer vermittlungsseitigen Funktion zur Beeinflussung der Rufsteuerung usw. Solche Aufrufe werden ggf. an das Vermittlungssystem VS weitergeleitet. Hierbei ist das Anfügen einer Absenderkennung günstig, um später eine empfangene Quittung eindeutig zuordnen zu können.

Die Leistungsmerkmalablaufsteuerung LMAS nach Figur 9 enthält einen Meldungsverteiler MV zum Verteilen der Ereignismeldung und der Leistungsmerkmalsignalisierung, die von dem Vermittlungssystem VS gesendet werden, auf die entsprechenden Leistungsmerkmalmodule, also die zugeordneten Aufrufsteuerungen ARS bzw. Koordinationssteuerungen RSC innerhalb der Leistungsmerkmalmodule LMB, LMB1, LMB2, LMB3. Außerdem enthält die Leistungsmerkmalablaufsteuerung LMAS eine Leistungsmerkmalkorrelationssteuerung LMKS, um den Empfänger einer zuzustellenden Meldung zu bestimmen und die Korrelation der Leistungsmerkmale LM vorzunehmen, also die Koexistenz mehrerer Leistungsmerkmalaufrufe, die sich ggf. gegenseitig beeinflussen können, sicherzustellen sowie angeforderte, mit bereits aktivierten oder aufgerufenen Leistungsmerkmalen LM unverträgliche Leistungsmerkmale LM zu verbieten.

Außerdem enthält die Leistungsmerkmalablaufsteuerung, wie bereits erwähnt, eine Datenbasis DB. Diese Datenbasis DB enthält Ereignistabellen, aus denen zu ersehen ist, welcher über die Adresse der zugehörigen Koordinationssteuerung RSC adressierbare Leistungsmerkmalaufruf welcher Ereignisse erwartet, über die Adresse der einem Leistungsmerkmalaufruf zugehörigen Koordinationssteuerung RSC adressierbare Aktivierungsdaten sowie Adreßinformationen, wie einem Leistungsmerkmal-Bezeichner in Verbindung mit der Adresse der entsprechenden Aufrufsteuerung ARS sowie einem Subleistungsmerkmalbezeichner mit der Adresse der zugehörigen Koordinationssteuerung RSC.

Die Korrelationssteuerung LMKS greift auf die Datenbasis DB zu und bestimmt bei zuzustellenden Ereignismeldungen die Adresse der Empfänger-Koordinationssteuerung RSC anhand der Ereignistabelle in der Datenbasis DB. Diese Adresse der Koordinationssteuerung RSC wurde bei Aufruf des Leistungsmerkmales in der Datenbasis DB vermerkt und gibt den Empfänger der Ereignismeldung an.

Wie bereits erwähnt, meldet sich eine Aufrufsteuerung ARS bei der Initialisierung des Leistungsmerkmalsystems LMS mit einem Leistungsmerkmal-Bezeichner des entsprechenden Leistungsmerkmalmoduls LMB und der Adresse der Aufrufsteuerung ARS bei der Leistungsmerkmalablaufsteuerung LMAS an. Die Leistungsmerkmalkorrelationssteuerung LMKS bestimmt bei Aktivierungsmeldungen die Adresse der als Empfänger vorgesehenen Aufrufsteuerung ARS des betreffenden Leistungsmerkmalmodules LMB, LMB1, LMB2, LMB3 anhand dieses Bezeichners, der am Endgerät der Aktivierungsaufforderung des entsprechenden Leistungsmerkmals LM eingegeben wird. Ein Beispiel für einen solchen Bezeichner ist CFU für die Funktion "CallForwardingUnconditional".

Wie aus Figur 9 zu erkennen ist, leitet der Meldungsverteiler MV die Leistungsmerkmal-Signalisierung über die dargestellte Linie 2 in Richtung der Vermittlungssteuerung VS weiter. Hierbei wird eine Absenderkennung der absendenden Teilsteuerung R1, R2, R3 an die übermittelte Signalisierungsmeldung angehängt, um Rückmeldungen zuordnen zu können. Insgesamt werden von und zu dem Meldungsverteiler MV über die Linie 2 Ereignismeldungen von der Vermittlungssteuerung VS übertragen sowie die Leistungsmerkmalsignalisierung in beiden Richtungen. Außerdem führt der Meldungsverteiler MV nach jeweiliger Anfrage bei der Leistungsmerkmalkorrelationssteuerung LMKS eine Verteilung (4 in Figur 9) der Vermittlungsssteuerungs-Ereignisse EM (in Figur 2 und 3) an die Leistungsmerkmalmodule LMB, LMB1, LMB2, LMB3 sowie eine Verteilung (4 in Figur 9) der Leistungsmerkmalaktivierungsmeldungen AM (in Figur 2, 4, 6 und 7) zum jeweils zugeordneten Leistungsmerkmal LM durch. Insgesamt werden von und zu dem Meldungsverteiler MV über die zu den Leistungsmerkmalmodulen LMB führende Linie 4 bestimmten Leistungsmerkmalen LM bzw. bestimmten Leistungsmerkmalinstanzen zugeordnete Ereignismeldungen übertragen sowie die Leistungsmerkmalsignalisierung in beiden Richtungen. Über die Linie 3 werden zwischen den Leistungsmerkmalmodulen LMB und den Leistungsmerkmalentwicklungsbausteinen LMEB Aufruf und Quittung der Leistungsmerkmalentwicklungsbausteine LMEB übermittelt. Über die Linie 1 werden zwischen den den Leistungsmerkmalentwicklungsbausteinen LMEB und dem Vermittlungssystem VS Aufruf und Quittung der vermittlungsseitigen Funktionen zur Rufbeeinflussung übermittelt. Die Linien 1, 2, 3 und 4 sind hierbei nur Gedankenhilfen zur besseren Veranschaulichung der Kommunikationsbeziehungen.

Nachstehend werden mögliche Abläufe der Meldungsverteilung innerhalb der Leistungsmerkmalablaufsteuerung LMAS für verschiedene Meldungsarten beschrieben.

Bei Eintreffen einer Aktivierungsmeldung FReq für ein Leistungsmerkmal hat der Meldungsverteiler MV folgende Arbeitsweise:
- Die Aktivierungsmeldung FReq trifft von dem Vermittlungssystem VS ein;
- diese Meldung wird an die Leistungsmerkmalkorrelationssteuerung LMKS übergeben;
- die Leistungsmerkmalkorrelationssteuerung LMKS greift auf die Datenbasis DB zu, um die Adresse der Aufrufsteuerung ARS des angeforderten Leistungsmerkmals LM zu bestimmen;
- die Korrelationssteuerung LMKS bewertet die Zulässigkeit der Anforderung und gibt abhängig davon die Aktivierungsmeldung mit der Adresse der entsprechenden Aufrufsteuerung ARS zurück an den Meldungsverteiler MV;
- die Aktivierungsmeldung wird an die zuständige Aufrufsteuerung ARS des Leistungsmerkmalmodules LMB, LMB1, LMB2, LMB3 des angeforderten Leistungsmerkmals LM weitergeleitet.

Bei Eintreffen einer Aktivierungsmeldung FReq für ein Unter-Leistungsmerkmal hat der Meldungsverteiler MV folgende Arbeitsweise:
- Die Aktivierungsmeldung FReq trifft von dem Vermittlungssystem VS ein;
- diese Meldung wird an die Leistungsmerkmalkorrelationssteuerung LMKS übergeben;
- die Leistungsmerkmalkorrelationssteuerung LMKS greift auf die Datenbasis DB zu, um die Adresse der Koordinationssteuerung RSC des angeforderten Unter-Leistungsmerkmals zu bestimmen, da Aktivierungsmeldungen für Unter-Leistungsmerkmale der Koordinationssteuerung RSC des entsprechenden Leistungsmerkmal-Aufrufs zugestellt werden;
- die Korrelationssteuerung LMKS bewertet die Zulässigkeit der Anforderung und gibt abhängig davon die Aktivierungsmeldung mit der Adresse der entsprechenden Koordinationssteuerung RSC zurück an den Meldungsverteiler MV;
- die Aktivierungsmeldung wird an die zuständige Koordinationssteuerung RSC des Leistungsmerkmalmodules LMB, LMB1, LMB2, LMB3 des angeforderten Leistungsmerkmals LM weitergeleitet.

Bei Eintreffen einer Deaktivierungsmeldung FCanc für ein Leistungsmerkmal LM hat der Meldungsverteiler MV folgende Arbeitsweise:
- Die Deaktivierungsmeldung FCanc trifft von dem Vermittlungssystem VS ein;
- diese Meldung wird an die Leistungsmerkmalkorrelationssteuerung LMKS übergeben;
- die Leistungsmerkmalkorrelationssteuerung LMKS greift auf die Datenbasis DB zu, um die Adresse der Koordinationssteuerung RSC des angeforderten Leistungsmerkmals LM zu bestimmen; existieren mehrere Koordinationssteuerungen RSC für das vorliegende Leistungsmerkmal LM mit der vorliegenden Teilnehmer-Kennung, besteht also keine eindeutige Zuordnung zu einer Koordinationssteuerung RSC, so wird die Deaktivierungsmeldung der zugeordneten Aufrufsteuerung ARS zugestellt;
- die Korrelationssteuerung LMKS gibt die Aktivierungsmeldung mit der Empfängeradresse der entsprechenden Koordinationssteuerung RSC bzw. Aufrufsteuerung ARS zurück an den Meldungsverteiler MV;
- die Aktivierungsmeldung wird an die zuständige Koordinationssteuerung RSC bzw. Aufrufsteuerung ARS des Leistungsmerkmalmodules LMB, LMB1, LMB2, LMB3 des zu deaktivierenden Leistungsmerkmals LM weitergeleitet.

Bei Eintreffen einer Meldung für ein im Vermittlungssystem aufgetretenes Ereignis hat der Meldungsverteiler MV folgende Arbeitsweise:
- Die Ereignismeldung trifft von dem Vermittlungssystem VS ein;
- diese Meldung wird an die Leistungsmerkmalkorrelationssteuerung LMKS übergeben;
- die Leistungsmerkmalkorrelationssteuerung LMKS greift auf die Datenbasis DB zu, um die Adresse einzelnen Instanzen, d.h. der einzelnen Koordinationssteuerungen RSC der einzelnen Leistungsmerkmalmodule LMB1, LMB2, LMB3 zu ermitteln, für die ein entsprechender Ereignissgenerierungspunkt gesetzt ist und um den dem von der Ereignismeldung betroffenen Kommunikationsendgerät TE-A, TE-B im Rahmen der Leistungsmerkmalsteuerung zugeordneten Bezeichner R_Var festzustellen (siehe hierzu Konfigurationsdaten der Leistungsmerkmalmodule LMB);
- die Korrelationssteuerung LMKS gibt die Ereignismeldung mit der Adresse der die betreffende Instanz repräsentierenden Koordinationssteuerung RSC zurück an den Meldungsverteiler MV; eine Ereignismeldung kann hierbei auch mehreren, jeweils betroffenen Leistungsmerkmalmodulen LMB, LMB1, LMB2, LMB3 bzw. mehreren, jeweils betroffenen Instanzen eines Leistungsmerkmalmoduls LMB, LMB1, LMB2, LMB3, d.h. mehreren Koordinationssteuerungen RSC zugewiesen werden; die Koordinationssteuerung RSC legt die Ereignismeldungs-Interessenten fest, denen dieses Ereignis abhängig von der Verträglichkeit der momentan aktivierten bzw. aufgerufenen Leistungsmerkmale zuzustellen ist;
- die Ereignismeldung wird an die () festgelegten Koordinationssteuerungen RSC der betroffenen Leistungsmerkmal-Aufrufe der Leistungsmerkmalmodule LMB, LMB1, LMB2, LMB3 weitergeleitet.

Der Aufruf von Leistungsmerkmalentwicklungsbausteinen LMEB innerhalb der Leistungsmerkmalablaufsteuerung LMAS erfolgt auf das Senden einer der gewünschten Funktion der Leistungsmerkmalentwicklungsbausteine LMEB entsprechenden Aufrufmeldung von einem Leistungsmerkmalmodul LMB, LMB1, LMB2, LMB3 an die Leistungsmerkmalentwicklungsbausteine LMEB der Leistungsmerkmalablaufsteuerung LMAS. Der entsprechende Entwicklungsbaustein LMEB wird aufgerufen. Ist die Leistungsmerkmalentwicklungsbausteinfunktion abgearbeitet, so quittiert sie dies im aufrufenden Leistungsmerkmalmodul LMB, genauer der aufrufenden Teilsteuerungen R1, R2, R3.

Im gezeigten Ausführungsbeispiel sind folgende Leistungsmerkmalentwicklungsbausteine LMEB vorgesehen:
- Aufruf der vermittlungsseitigen Funktionen zur Beeinflussung der Rufsteuerung;
- lokale Datenbankfunktionen, wie z.B. Aktivierungsparameter der Leistungsmerkmalaktivierung oder das Bestätigen der Adresse der Aufrufsteuerung ARS, wenn der zugehörige Leistungsmerkmalbezeichner bekannt ist;
- das Anmelden von Leistungsmerkmalen LM und Leistungsmerkmalaufrufen, insbesondere das Aufbauen von Adreßinformationen in der Datenbank DB sowie das Anlegen von Speicherbereich für Leistungsmerkmalinstanzen;
- die Ereignisverwaltung, insbesondere das Setzen oder Löschen von angeforderten Ereignissen in der lokalen Datenbasis DB und das Übermitteln der Anforderung an das Vermittlungssystem VS;
- Zeitgeberfunktionen.

Bei Weiterleitung dieser Funktion an andere Komponenten oder das Vermittlungssystem VS wird dem Aufruf die AdreBinformation des Absenders, üblicherweise einer Teilsteuerung R1, R2, R3, angehängt, um die Quittung des Aufrufes dem entsprechenden Absender zuordnen zu können.

## Patentansprüche

1. Kommunikationssystem (KS) mit einem Leistungsmerkmalsystem (LMS) zur Realisierung von Leistungsmerkmalen und einem Vermittlungssystem (VS) zum Auf- und Abbau von Verbindungen zwischen angeschlossenen Teilnehmerendgeräten (TE) und zum Melden von vermittlungstechnischen Ereignissen sowie Leistungsmerkmal-Aktivierungs- und Leistungsmerkmal-Deaktivierungsanforderungen an das Leistungsmerkmalsystem (LMS); das Leistungsmerkmalsystem (LMS) bestehend aus mehreren Leistungsmerkmalmodulen (LMB) und einer hiermit kommunizierenden Leistungsmerkmalablaufsteuerung (LMAS), wobei die Leistungsmerkmalmodule (LMB) von der Leistungsmerkmalablaufsteuerung (LMAS) zur Verfügung gestellte Leistungsmerkmal-Entwicklungsbausteine (LMEB) aufrufen können, wobei von der Leistungsmerkmalablaufsteuerung (LMAS) Meldungen über in dem Vermittlungssystem (VS) auftretende vermittlungstechnische Ereignisse, Leistungsmerkmal-Aktivierungs- und Leistungsmerkmal-Deaktivierungsmeldungen sowie von Teilnehmerendgeräten (TE) eingegebene Daten jeweils an ein spezielles Leistungsmerkmalmodul (LMB) übermittelt werden und Signalisierungsmeldungen für die Teilnehmerendgeräte (TE) von den Leistungsmerkmalmodulen (LMB) an das Vermittlungssystem (VS) übermittelt werden,
**dadurch gekennzeichnet,**
**daß** die Leistungsmerkmalablaufsteuerung (LMAS) abhängig von einer Leistungsmerkmalaktivierungsanforderung eine Leistungsmerkmalaktivierungsmeldung an das der Aktivierungsanforderung zugeordnete spezielle Leistungsmerkmalmodul (LMB) übermittelt und daß jedes Leistungsmerkmalmodul (LMB)
- mehrere, jeweils einen meldungsabhängigen Teilablauf steuernde Teilsteuerungen (R1, R2, R3),
- mindestens eine von der Leistungsmerkmalablaufsteuerung (LMAS) Meldungen empfangende und diese Meldungen an die diesen Meldungen jeweils zugeordneten Teilsteuerungen (R1, R2, R3) weiterleitende Koordinationssteuerung (RSC) und
- eine Aufrufsteuerung (ARS) zum von einer eintreffenden Leistungsmerkmalaktivierungsmeldung abhängigen Aufrufen einer Koordinationssteuerung (RSC) enthält.

2. Kommunikationssystem (KS) nach Anspruch 1, **dadurch gekennzeichnet, daß** ein Instantiieren jeweils benötigter Teilsteuerungen (R1, R2, R3) durch die Koordinationssteuerung (RSC) vorgesehen ist.

3. Kommunikationssystem (KS) nach Anspruch 1 oder 2, **gekennzeichnet durch** eine derartige Ausgestaltung des Leistungsmerkmalsystems (LMS), daß abhängig von einer eintreffenden Leistungsmerkmalaktivierungsmeldung das Instantiieren einer Koordinationssteuerung (RSC) **durch** die Aufrufsteuerung (ARS) vorgesehen ist.

4. Kommunikationssystem (KS) nach einem der vorhergehenden Ansprüche, **dadurch gekennzeichnet, daß** die Leistungsmerkmalablaufsteuerung (LMAS) durch die Leistungsmerkmalmodule (LMB) unter Angabe einer Adreßinformation über das Vorhandensein dieser Leistungsmerkmalmodule (LMB) informiert wird.

5. Kommunikationssystem (KS) nach Anspruch 4, **gekennzeichnet durch** eine derartige Ausgestaltung des Leistungsmerkmalsystems (LMS), daß die Information über das Vorhandensein eines Leistungsmerkmalmoduls (LMB) jeweils von dessen Aufrufsteuerung (ARS) an die Leistungsmerkmalablaufsteuerung (LMAS) übermittelt wird.

6. Kommunikationssystem (KS) nach einem der vorhergehenden Ansprüche, **gekennzeichnet durch** eine derartige Ausgestaltung des Leistungsmerkmalsystems (LMS), daß die Koordinationssteuerung (RSC) nach Aufruf **durch** die Aufrufsteuerung (ARS) unter Angabe einer Adreßinformation eine Meldung über den erfolgten Aufruf an die Leistungsmerkmalablaufsteuerung (LMAS) übermittelt.

7. Kommunikationssystem (KS) nach einem der vorhergehenden Ansprüche, **gekennzeichnet durch** die Zuordnung mehrerer abhängiger Unterleistungsmerkmale zu einem Leistungsmerkmal und **durch** eine derartige Ausgestaltung des Leistungsmerkmalsystems (LMS), daß die Koordinationssteuerung (RSC) nach Aufruf **durch** die Aufrufsteuerung (ARS) die Aufrufbarkeit dieser Unterleistungsmerkmale unter Angabe der Adresse dieser Koordinationssteuerung (RSC) an die Leistungsmerkmalablaufsteuerung (LMAS) übermittelt.

8. Kommunikationssystem (KS) nach einem der vorhergehenden Ansprüche, **gekennzeichnet durch** eine derartige Ausgestaltung des Leistungsmerkmalsystems (LMS), daß die Leistungsmerkmalablaufsteuerung (LMAS) abhängig von einer Leistungsmerkmaldeaktivierungsanforderung eine Leistungsmerkmal-Deaktivierungsmeldung an das der Deaktivierungsanforderung zugeordnete spezielle Leistungsmerkmalmodul (LMB) übermittelt und daß mindestens ein Leistungsmerkmalmodul (LMB) eine Deaktivierungsauswahlsteuerung (DAS) enthält, die abhängig von einer eintreffenden Leistungsmerkmal-Deaktivierungsmeldung die von dieser Leistungsmerkmal-Deaktivierungsmeldung betroffene und anzusprechende Koordinationssteuerung (RSC)festlegt.

9. Kommunikationssystem nach Anspruch 8, **gekennzeichnet durch** eine derartige Ausgestaltung des Leistungsmerkmalsystems (LMS), daß die Deaktivierungsauswahlsteuerung (DAS) bei Eingang einer Deaktivierungsmeldung die zur Spezifizierung der zu deaktivierenden Koordinationssteuerung (RSC) erforderlichen Parameter abfragt und abhängig von diesen Parametern die Adresse der anzusteuernden Koordinationssteuerung (RSC) bestimmt.

10. Kommunikationssystem nach Anspruch 9, **gekennzeichnet durch** eine derarige Ausgestaltung des Leistungsmerkmalsystems (LMS), daß die Deaktivierungsauswahlsteuerung (DAS) diese Parameter von der den Deaktivierungsaufruf veranlassenden Komponente abfragt.

11. Kommunikationssystem (KS) nach einem der vorhergehenden Ansprüche, **dadurch gekennzeichnet, daß** die Leistungsmerkmalablaufsteuerung (LMAS) neben den Leistungsmerkmalentwicklungsbausteinen einen Meldungsverteiler hat, um die von dem Vermittlungssystem (VS) eingehenden Meldungen über im Vermittlungssystem auftretende vermittlungstechnische Ereignisse sowie Leistungsmerkmalaktivierungs- und Leistungsmerkmaldeaktivierungsmeldungen an die Leistungsmerkmalmodule (LMB) zu übermitteln.

12. Kommunikationssystem (KS) nach einem der vorhergehenden Ansprüche, **dadurch gekennzeichnet, daß** die Leistungsmerkmalablaufsteuerung (LMAS) eine Leistungsmerkmal-Korrelationssteuerung (LMKS) enthält, um die Zulässigkeit von Leistungsmerkmalaktivierung und Leistungsmerkmalaufrufen bei Aktivierung und Aufruf zu überprüfen.

13. Kommunikationssystem (KS) nach Anspruch 12, **dadurch gekennzeichnet, daß** die Leistungsmerkmalkorrelationssteuerung (LMKS) bei jeder eintreffenden Ereignismeldung den oder die Leistungsmerkmalmodule (LMB) bestimmt, denen diese Ereignismeldung zuzustellen ist.

14. Kommunikationssystem (KS) nach einem der vorhergehenden Ansprüche, **dadurch gekennzeichnet, daß** die Leistungsmerkmalablaufsteuerung (LMAS) eine zentrale Datenbasis (DB) enthält mit Ereignistabellen für aktivierte sowie aufgerufene Leistungsmerkmalmodule (LMB), Leistungsmerkmal-Aktivierungsdaten und von der Leistungsmerkmalablaufsteuerung (LMAS) anzusprechende Leistungsmerkmalmoduladressen und Koordinationssteuerungsadressen.

## Claims

1. Communications system (KS) having a service feature system (LMS) for providing service features, and having a switching system (VS) for setting up and clearing connections between connected subscriber terminals (TE) and for signalling switching events as well as service feature activation and service feature deactivation requests to the service feature system (LMS); the service feature system (LMS) comprising a number of service feature modules (LMB) and a service feature sequence controller (LMAS) which communicates with it, with the service feature modules (LMB) being able to call service feature development modules (LMEB) which have been made available by the service feature sequence controller (LMAS), with the service feature sequence controller (LMAS) in each case transmitting messages about switching events which have occurred in the switching system (VS), service feature activation messages and service feature deactivation messages, as well as data entered by subscriber terminals (TE) to a specific service feature module (LMB), and transmitting signalling messages for the subscriber terminals (TE) from the service feature modules (LMB) to the switching system (VS),
**characterized**
**in that** the service feature sequence controller (LMAS) transmits a service feature activation message to the specific service feature module (LMB) that is associated with the activation request as a function of a service feature activation request, and in that each service feature module (LMB) contains
- a number of controller elements (R1, R2, R3) which each control one message-dependent sequence element,
- at least one coordination controller (RSC) which receives messages from the service feature sequence controller (LMAS) and passes on these messages to the controller elements (R1, R2, R3) which are in each case associated with these messages, and
- a call controller (ARS) for calls, which are dependent on the function of an arriving service feature activation message, of a coordination controller (RSC).

2. Communications system (KS) according to Claim 1, **characterized in that** instantiation of respectively required controller elements (R1, R2, R3) is provided by the coordination controller (RSC).

3. Communications system (KS) according to Claim 1 or 2, **characterized by** the service feature system (LMS) being configured such that the instantiation of a coordination controller (RSC) by the call controller (ARS) is provided as a function of an arriving service feature activation message.

4. Communications system (KS) according to one of the preceding claims, **characterized in that** the service feature sequence controller (LMAS) is informed by the service feature modules (LMB) of the presence of these feature modules (LMB) by quoting address information.

5. Communications system (KS) according to Claim 4, **characterized by** the service feature system (LMS) being configured such that the information about the presence of a service feature module (LMB) is in each case transmitted from its call controller (ARS) to the service feature sequence controller (LMAS).

6. Communications system (KS) according to one of the preceding claims, **characterized by** the service feature system (LMS) being configured such that after a call by the call controller (ARS), the coordination controller (RSC) transmits a message about the call that is being made to the service feature sequence controller (LMAS), quoting address information.

7. Communications system (KS) according to one of the preceding claims, **characterized by** the allocation of a number of dependant service subfeatures to a service feature, and by the service feature system (LMS) being configured such that, after a call by the call controller (ARS), the coordination controller (RSC) transmits the capability to call these service subfeatures to the service feature sequence controller (LMAS), quoting the address of this coordination controller (RSC).

8. Communications system (KS) according to one of the preceding claims, **characterized by** the service feature system (LMS) being configured such that the service feature sequence controller (LMAS) transmits a service feature deactivation message to the specific service feature module (LMB) which is associated with a deactivation request, as a function of that service feature deactivation request, and in that at least one service feature module (LMB) contains a deactivation selection controller (DAS) which defines the coordination controller (RSC) which is affected by and is to be addressed by a service feature deactivation message as a function of this arriving service feature deactivation message.

9. Communications system according to Claim 8, **characterized by** the service feature system (LMS) being configured such that the deactivation selection controller (DAS) checks the parameters which are required for specification of the coordination controller (RSC) which is to be deactivated on receipt of a deactivation message, and determines the address of the coordination controller (RSC) that is to be driven, as a function of these parameters.

10. Communications system according to Claim 9, **characterized by** the service feature system (LMS) being configured such that the deactivation selection controller (DAS) checks these parameters of the component which initiates the deactivation call.

11. Communications system (KS) according to one of the preceding claims, **characterized in that**, in addition to the service feature development modules, the service feature sequence controller (LMAS) has a message distributor, in order to transmit to the service feature modules (LMB) the messages which arrive from the switching system (VS) about switching events which have occurred in the switching system, as well as service feature activation and service feature deactivation messages.

12. Communications system (KS) according to one of the preceding claims, **characterized in that** the service feature sequence controller (LMAS) contains a service feature correlation controller (LMKS) in order to check the permissibility of service feature activation and service feature calls for activation and calling.

13. Communications system (KS) according to Claim 12, **characterized in that**, whenever an event message arrives, the service feature correlation controller (LMKS) determines the service feature module or modules (LMB) which is or are to be associated with this event message.

14. Communications system (KS) according to one of the preceding claims, **characterized in that** the service feature sequence controller (LMAS) contains a central database (DB) with event tables for activated and call service feature modules (LMB), service feature activation data and service feature module addresses and coordination controller addresses that are to be addressed by the service feature sequence controller (LMAS).

## Revendications

1. Système de communication (KS), comportant un système de services complémentaires (LMS), destiné à réaliser des services complémentaires, et un système de commutation (VS), destiné à établir et libérer des liaisons entre des terminaux d'abonnés (TE), qui y sont raccordés, et destiné à annoncer des événements de commutation, ainsi que des requêtes d'activation de services complémentaires et de désactivation de services complémentaires adressés au système de services complémentaires (LMS); le système de services complémentaires (LMS) se composant de plusieurs modules de service complémentaire (LMB) et d'une commande du déroulement des services complémentaires (LMAS), qui communique avec eux, les modules de service complémentaire (LMB) pouvant appeler des composants de génération des services complémentaires (LMEB) mis à disposition par la commande du déroulement des services complémentaires (LMAS), la commande du déroulement des services complémentaires (LMAS) transmettant des messages concernant des événements de commutation qui se produisent dans le système de commutation (VS), des messages d'activation de service complémentaire et des messages de désactivation de service complémentaire, ainsi que des données entrées par les terminaux d'abonnés (TE), dans chaque cas, à un module particulier de service complémentaire (LMB) et des messages de signalisation pour les terminaux d'abonnés (TE) étant transmis par les modules de service complémentaire (LMB) au système de commutation (VS)
**caractérisé par le fait**
**que** la commande du déroulement des services complémentaires (LMAS) transmet, avec assujettissement à une requête d'activation de service complémentaire, un message d'activation de service complémentaire au module particulier de service complémentaire (LMB) affecté à la requête de service complémentaire et que chaque module de service complémentaire (LMB) renferme
- plusieurs commandes partielles (R1, R2, R3) contrôlant chacune une séquence partielle assujettie à un message,
- au moins une commande de coordination (RSC), qui reçoit des messages provenant de la commande du déroulement des services complémentaires (LMAS) et qui retransmet ces messages aux commandes partielles (R1, R2, R3) affectées chacune à ces messages et
- une commande d'appel (ARS) destinée à l'appel d'une commande de coordination (RSC), avec assujettissement à un message d'activation de service complémentaire qui lui parvient.

2. Système de communication (KS) selon la revendication 1 **caractérisé par le fait qu'**il est prévu une mise en instances par la commande de coordination (RSC), des commandes partielles (R1, R2, R3) nécessaires selon le cas.

3. Système de communication (KS) selon la revendication 1 ou 2 **caractérisé par** un perfectionnement du système de services complémentaires (LMS) de la sorte que, avec assujettissement à un message d'activation de service complémentaire, qui lui parvient, il est prévu la mise en instances d'une commande de coordination (RSC) par la commande d'appel (ARS).

4. Système de communication (KS) selon l'une des revendications précédentes **caractérisé par le fait que** la commande du déroulement des services complémentaires (LMAS) est informée par les modules de service complémentaire (LMB), avec indication d'une information d'adressage, de l'existence de ces modules de service complémentaire (LMB).

5. Système de communication (KS) selon la revendication 4 **caractérisé par** un perfectionnement du système de services complémentaires (LMS) de la sorte que l'information concernant l'existence d'un module de service complémentaire (LMB) est transmise, dans chaque cas, par sa commande d'appel (ARS) à la commande du déroulement des services complémentaires (LMAS).

6. Système de communication (KS) selon l'une des revendications précédentes **caractérisé par** un perfectionnement du système de services complémentaires (LMS) de la sorte que la commande de coordination (RSC), après un appel par la commande d'appel (ARS), transmet, avec indication d'une information d'adressage, un message concernant l'appel effectué à la commande du déroulement des services complémentaires (LMAS).

7. Système de communication (KS) selon l'une des revendications précédentes **caractérisé par** l'affectation de plusieurs sous-services complémentaires dépendants à un service complémentaire et par un perfectionnement du système de services complémentaires (LMS) de la sorte que la commande de coordination (RSC), après appel par la commande d'appel (ARS), transmet la possibilité d'appeler ces sous-services complémentaires, avec indication de l'adresse de cette commande de coordination (RSC), à la commande du déroulement des services complémentaires (LMAS).

8. Système de communication (KS) selon l'une des revendications précédentes **caractérisé par** un perfectionnement du système de services complémentaires (LMS) de la sorte que la commande du déroulement des services complémentaires (LMAS) transmet, avec assujettissement à une requête de désactivation de service complémentaire, un message de désactivation de service complémentaire au module particulier de service complémentaire (LMB) affecté à la requête de désactivation et que, au moins, un module de service complémentaire (LMB) renferme une commande de sélection des désactivations (DAS), qui fixe, avec assujettissement à l'arrivée d'un message de désactivation de service complémentaire, la commande de coordination (RSC) concernée par ce message de désactivation de service complémentaire, qu'il faut solliciter.

9. Système de communication (KS) selon la revendication 8 **caractérisé par** un perfectionnement du système de services complémentaires (LMS) de la sorte que la commande de sélection des désactivations (DAS), lors de l'arrivée d'un message de désactivation, interroge les paramètres nécessaires pour la spécification de la commande de coordination (RSC) à désactiver et, en fonction de ces paramètres, détermine l'adresse de la commande de coordination (RSC) à exciter.

10. Système de communication (KS) selon la revendication 9 **caractérisé par** un perfectionnement du système de services complémentaires (LMS) de la sorte que la commande de sélection des désactivations (DAS) interroge ces paramètres auprès de la composante qui a provoqué l'appel de désactivation.

11. Système de communication (KS) selon l'une des revendications précédentes **caractérisé par le fait que** la commande du déroulement des services complémentaires (LMAS) a, en plus de composants de génération des services complémentaires, un distributeur de messages destiné à transmettre aux modules de service complémentaire (LMB) les messages arrivant en provenance du système de commutation (VS) et concernant des événements de commutation qui se produisent dans le système de commutation, ainsi que des messages d'activation de services complémentaires et de désactivation de services complémentaires.

12. Système de communication (KS) selon l'une des revendications précédentes **caractérisé par le fait que** la commande du déroulement des services complémentaires (LMAS) renferme une commande de corrélation des services complémentaires (LMKS) destinée à vérifier la validité de l'activation de services complémentaires et d'appels de services complémentaires lors de l'activation et de l'appel.

13. Système de communication (KS) selon la revendication 12 **caractérisé par le fait que** la commande de corrélation des services complémentaires (LMKS) définit, chaque fois qu'un message d'événement arrive, le ou les modules de service complémentaire (LMB) auxquels il faut délivrer ce message d'événement.

14. Système de communication (KS) selon l'une des revendications précédentes **caractérisé par le fait que** la commande du déroulement des services complémentaires (LMAS) renferme une base centrale de données (DB) ayant des tableaux d'événements pour des modules de service complémentaire (LMB) activés et des modules de service complémentaire (LMB) appelés, des données d'activation de services complémentaires, ainsi que des adresses de modules de service complémentaire et des adresses de commande de coordination que la commande du déroulement des services complémentaires (LMAS) doit solliciter.
